# EUROPEAN PATENT APPLICATION

(11) **EP 4 755 730 A1**
(43) Date of publication of application: **10.06.2026**
(21) Application number: 25221935.7
(22) Date of filing: 09.12.2025
(51) Int. Cl.: B60S 1/04

(54) **MOTOR VEHICLE WITH CONCEALABLE WIPERS UNDER THE HOOD**

(30) Priority: 09.12.2024 IT 202400027903
(71) Applicant: FERRARI S.p.A., 41100 Modena (IT)
(72) Inventor: GUANDALINI, Roberto, 41100 MODENA (IT); MORANZONI, Ivan, 41100 MODENA (IT)
(74) Representative: Studio Torta S.p.A.

(57) **Abstract**

A motor vehicle (1) includes a longitudinal axis (X), a window (3) arranged transversally with respect to the longitudinal axis, and a hood (2) extending, according to a first configuration, substantially as a longitudinal extension of an upper portion (3b) of the window (3), with the hood and said upper portion (2, 3b) extending longitudinally in succession and flush with each other according to a profile (5) that is continuous at at least one domain of the longitudinal axis (X) between a first intermediate point of the hood (2) and a second intermediate point of said upper portion (3b), wherein the hood (2) comprises a hatch (10) movable relative to the rest of the hood (2) to define a second configuration of the hood (2) with the hatch (10) opening a compartment (23) at least partially delimited, according to the longitudinal axis (X), by a lower portion (3c) of the window (3) extending below the hatch (10) in the first configuration of the hood (2), the motor vehicle further comprising at least one windscreen wiper (25) with a wiper blade (26) movable in a sliding manner on the window (3) between a first position and a second position inside and outside said compartment (23), respectively, the compartment (23) being opened by the hatch (10) in the second configuration of the hood (2) to permit a movement of the wiper blade (26) from the first position to the second position or vice versa.

## Description

### CROSS-REFERENCE TO RELATED APPLICATIONS

This patent application claims priority from Italian patent application no. 102024000027903 filed on December 9, 2024, the entire disclosure of which is incorporated herein by reference.

### TECHNICAL FIELD

The invention relates to a motor vehicle and more in particular to a motor vehicle with a window and a hood having a shape such as to define a natural longitudinal extension of the window, namely a window and a hood having respective longitudinally adjacent portions with substantially equal curvature and arranged flush with one another.

### PRIOR ART

As it is known, some motor vehicles have a hood arranged flush with the windscreen and having a curvature at its rear edge that is approximately equal or in any case similar to the curvature of the longitudinally adjacent portion of the windscreen.

In this way, considering anyway the possible presence of a gap or demarcation area between the windscreen and the hood, they substantially extend along one single continuous surface, so that the front aerodynamic flow that hits the hood during use is not abruptly deflected from the front portion of the windscreen adjacent to the hood, but rather continues longitudinally in a laminar manner on the surface of the windscreen.

With this configuration of the hood and windscreen there is a first drawback, whereby the necessary windscreen wipers are particularly exposed, thus worsening the aerodynamic performance of the motor vehicle.

Furthermore, a second drawback lies in the fact that the exposure of the windscreen wipers significantly jeopardizes the overall aesthetics of the front portion of the motor vehicle.

Therefore, at least one of the drawbacks set forth above needs to be dealt with or eliminated.

An object of the invention is to fulfil the need discussed above, preferably in a simple and repeatable fashion.

### DESCRIPTION OF THE INVENTION

Said object is reached by a motor vehicle as defined in claim 1.

The dependent claims define special embodiments of the invention.

### BRIEF DESCRIPTION OF THE DRAWINGS

Hereinafter, an embodiment of the invention will be described, in order to allow the latter to be better understood, by way of non-limiting example and with reference to the accompanying drawings, wherein:
- figure 1 is a perspective view of a motor vehicle according to the invention,
- figures 2-4 are top views of the motor vehicle depicting respective distinct operating configurations of windscreen wipers of the motor vehicle, and
- figures 5, 6 are respective cross sections of a front portion of the motor vehicle in the operating configurations of figures 2, 3, respectively, according to a vertical cross section plane and comprising a longitudinal axis of the motor vehicle.

### EMBODIMENTS OF THE INVENTION

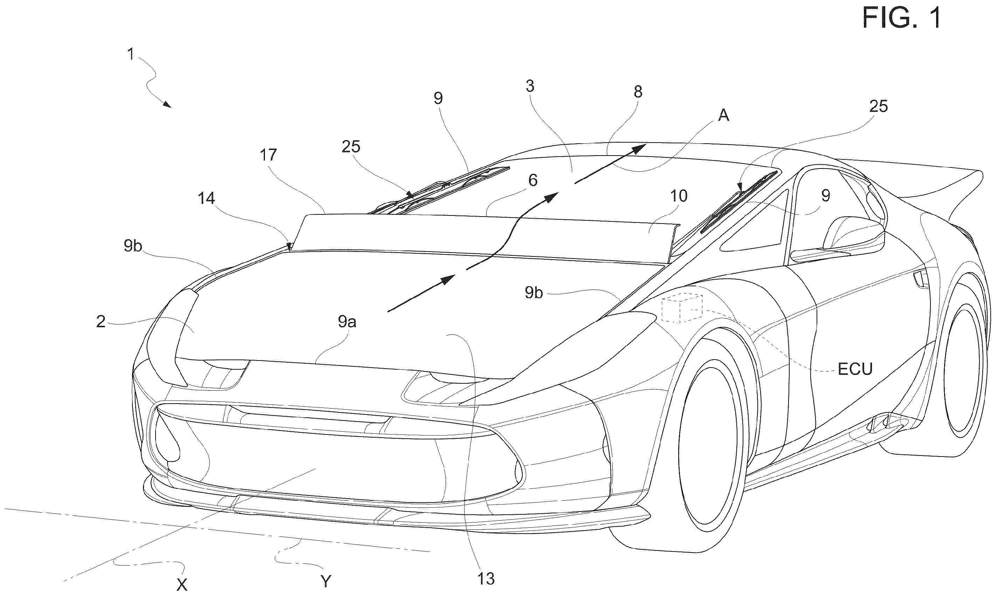

In figure 1, reference number 1 is used to indicate, as a whole, a motor vehicle.

The motor vehicle 1 has a longitudinal axis X, in particular coinciding with a roll axis of the motor vehicle 1. The longitudinal axis X belongs to a longitudinal plane, which is orthogonal to an axis Y, in turn coinciding in particular with a pitch axis of the motor vehicle 1; the axis Y is horizontal and orthogonal to the axis X.

Therefore, the longitudinal plane is vertical and preferably defines a middle plane for the motor vehicle 1.

The motor vehicle 1 comprises a hood 2 and a window arranged transversally with respect to the axis X or more in particular a windscreen 3, both forming part of a front portion of the motor vehicle 1. The windscreen 3 represents an example of window, which may be replaced throughout the description by a rear window or another window, considering the necessary adaptations, where necessary. Therefore, hereinafter, the term windscreen 3 will always be replaceable with the more generic term window 3 or with the rear window.

Similarly, although the hood 2 specifically is a front hood, it could also be a rear hood or a rear door.

Furthermore, for greater clarity, from now on, expressions such as front, rear, in front of, behind and the like refer to the axis X and, more specifically, to the normal travel direction of the motor vehicle 1.

The longitudinal axis X could be oriented like the normal travel direction, whereby it extends from the rear of the motor vehicle 1 towards the front portion of the motor vehicle 1.

The hood 2 is arranged in front of the windscreen 3 and more specifically follows the windscreen 3 in a position longitudinally adjacent to that of the windscreen 3, according to the axis X. Clearly, in case the windscreen 3 were replaced by the rear window, the hood would be arranged behind the rear window.

The hood 2 and the windscreen 3 are, in particular, separated from one another along the axis X by a gap or slit or separation line 4. In other words, the gap 4 extends or is arranged longitudinally between the hood 2 and the windscreen 3.

The hood 2 can be arranged so as to cover an underlying compartment (not shown), which can be, for example, a compartment for accommodating an engine or an object compartment.

The hood 2 or, more generally, the motor vehicle 1 has at least a first configuration, in which it is substantially arranged as a longitudinal, in particular front, extension of an upper portion 3b of the windscreen 3.

The term "substantially" herein indicates, in particular, the presence of the gap 4 between the hood 2 and the upper portion 3b along the axis X; the dimension of the gap 4 along the axis X can be in the order of millimetres and, in any case, it measures no more than 99 millimetres, whereby it is negligible with respect to the dimensions of the hood 2 and of the windscreen 3.

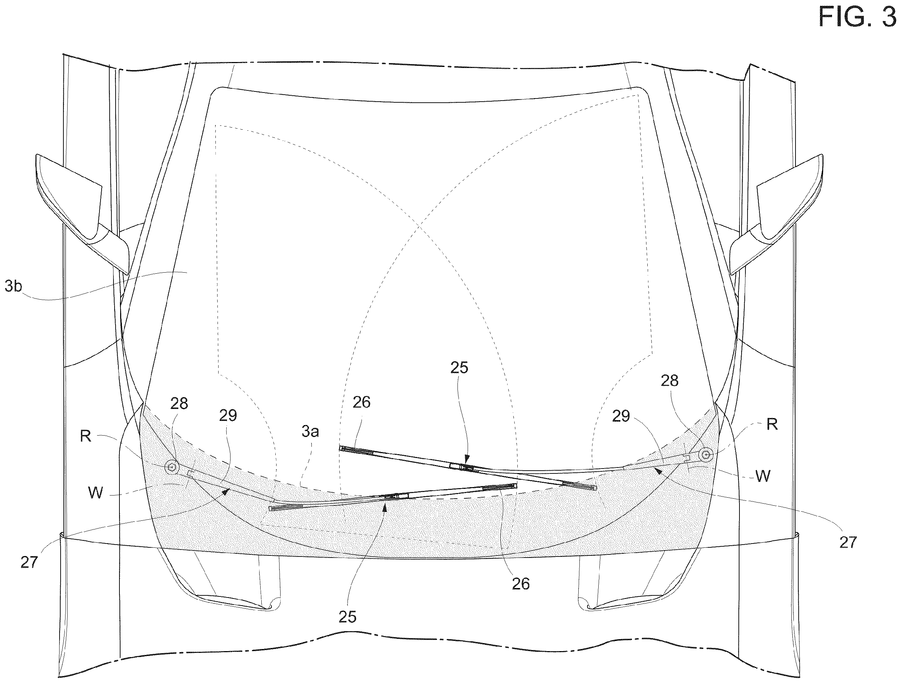

Along the axis X or more precisely on the longitudinal plane (figure 3), the hood 2 and the upper portion 3b are arranged flush with one another in the first configuration of the hood 2. In other words, the hood 2 and the upper portion 3b are aligned with one another at the gap 4; in particular, the alignment occurs according to a plane that is inclined with respect to the axis X.

Furthermore, in the first configuration of the hood 2 (figure 3), the hood 2 and the upper portion 3b extend longitudinally one after the other, namely in succession, according to a profile 5 lying in particular on the longitudinal plane. On the longitudinal plane, the profile 5 can be treated as a function of a variable associated with the axis X, possibly according to any one of the two possible opposite directions of the axis X (from the front to the rear of the motor vehicle 1 or vice versa).

The profile 5 runs along the outer surfaces 18, 19 of the hood 2 and of the upper portion 3b (despite being represented in figure 3 with a dashed line that is raised with respect to said outer surfaces 18, 19, for a mere displaying matter, that is, so as not to be confused with the contour lines of the hood 2 and of the windscreen 3).

The surfaces 18, 19 form an approximately straight angle, i.e. of about 180°, in particular between 170° and 190°.

More in detail, the upper portion 3b, the gap 4 and the hood 2 follow one another, in this order, along the profile 5, in particular without further elements or empty spaces between them, namely they follow one another in a tight sequence.

In addition to the upper portion 3b, the windscreen 3 comprises a lower portion 3c defining a lower end of the windscreen 3.

In the first configuration of the hood 2, the lower portion 3c at least partly or approximately totally extends under the hood 2, namely is covered by the hood 2.

The lower portion 3c extends longitudinally, namely according to the axis X, with continuity (in particular, in an integral manner so as to form one single piece) from the upper portion 3b with an increase or jump (in particular, a sudden one) in curvature with respect to the upper portion 3b at an ideal (i.e. virtual) boundary or boundary line 3a between the upper portion 3b and the lower portion 3c.

In practice, following the longitudinal axis X and the profile 5, the ideal boundary line 3a is the last line arranged flush, and therefore aligned, with the hood 2 according to the profile 5. More in detail, after the boundary line 3a, the windscreen 3 or the start of lower portion 3c becomes misaligned with (or diverts from) the hood 2 or departs from the profile 5 by descending with respect to the profile 5 under the hood 2 and under the profile 5 itself.

In particular, the curvature of the upper portion 3b at or around the ideal boundary line 3a is substantially zero (the radius of curvature is substantially infinite), whereas the lower portion 3c, at or around the ideal boundary line 3a, is concave (the radius of curvature is finite or limited), specifically towards the inside of the motor vehicle 1 or downwards.

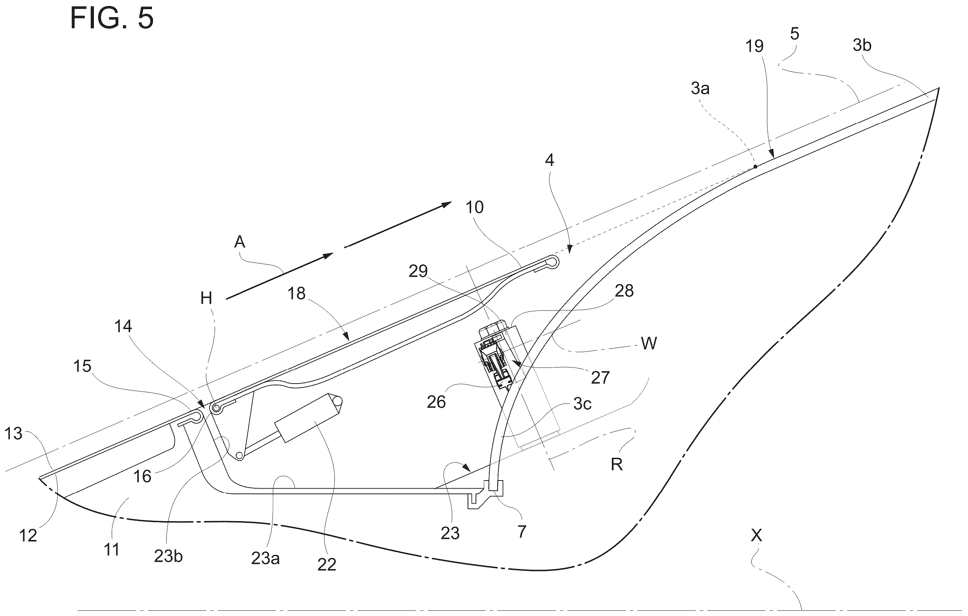

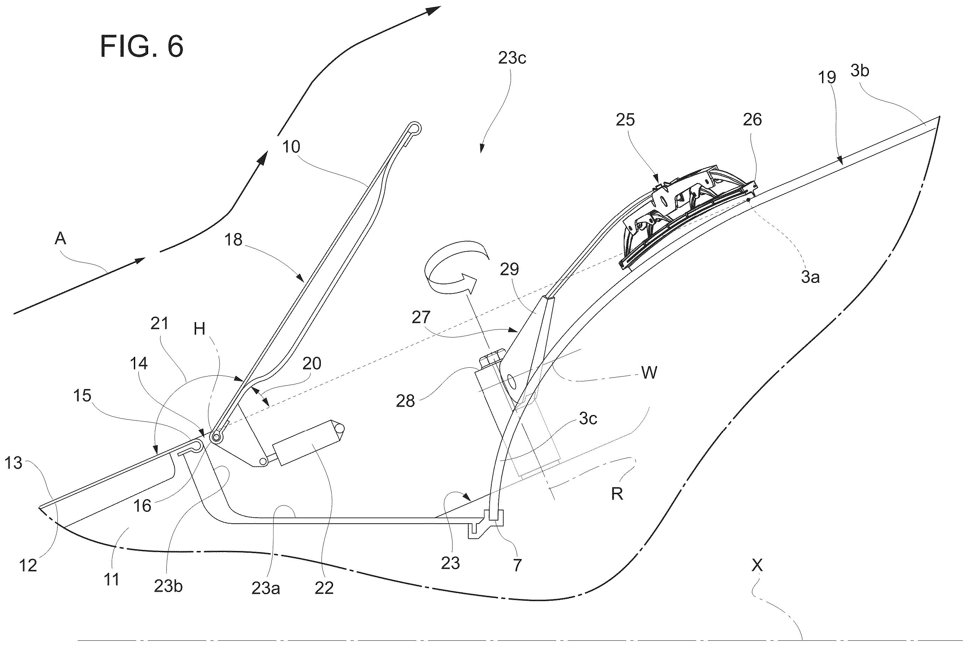

In figures 5 and 6, the ideal boundary line 3a is represented as a point.

The profile 5 is continuous at at least one domain or interval or segment of the axis X between an intermediate point of the hood 2 and an intermediate point of the upper portion 3b.

More precisely, an intermediate point is a point that does not lie on the edge of the hood 2 or on the ideal boundary line 3a, whereby an intermediate point is spaced apart, in particular towards the inside of the relative component, according to the axis X (in particular on the longitudinal plane), from an edge 6, in particular a rear edge, of the hood 2 or from the ideal boundary line 3a. In general, the edge 6 is the one closest to the ideal boundary line 3a according to the X axis.

However, the profile 5 clearly goes through the edge 6, through the ideal boundary line 3a, as well as through the gap 4.

The windscreen 3 extends longitudinally between an edge 7, in particular a front edge, and an edge 8, in particular a rear edge, opposite according to the axis X, as well as laterally between side edges 9.

The hood 2 extends longitudinally between the rear edge 6 and an edge 9a, in particular a front edge, opposite according to the axis X, as well as laterally between side edges 9b.

The gap 4 is defined longitudinally between the edge 6 and the ideal boundary line 3a.

Furthermore, the profile 5 preferably is globally continuous along the entire axis X.

The profile 5 specifically has a constant slope or curvature at least at the aforementioned domain or globally along the axis X. Alternatively, a difference between the curvatures of the profile 5 at the edge 6 and at the ideal boundary line 3a or around them on the axis X is limited by a threshold, in particular such that a front aerodynamic flow A, during the use of the motor vehicle 1, runs along the profile 5 with a substantially laminar regime or without producing significant turbulence at the gap 4.

In practice, the profile 5 does not rise at the ideal boundary line 3a of the windscreen 3.

In other words, mathematically speaking, the profile 5 is derivable or at least Lipschitz continuous (for example, since it has a limited derivative with respect to the axis X) at the domain or globally along the entire axis X.

Alternatively or in addition, the profile 5 could maintain its concavity (namely, it is always concave or convex) at the domain or globally along the entire axis X. In other words, the profile 5 could be free of inflection points, at least in the domain or along the entire axis X.

In the embodiment shown herein, the profile 5 is straight at the domain and, even more specifically, it is globally straight, although not necessarily.

In particular, the profile 5 extends upwards, in the sense that it specifically extends between a front end and a rear end having a (vertical) height greater than the front end. If the windscreen 3 were replaced by the rear window, the profile 5 would clearly extend in the opposite direction, downwards.

Going from the front to the rear, along the axis X, the profile 5 is increasing (more specifically, it is strictly increasing) at the domain or, more specifically, globally along the entire axis X. If the windscreen 3 were replaced by the rear window, the profile 5 would clearly, on the contrary, be decreasing.

The hood 2 comprises a hatch 10, which is movable relative to the rest of the hood 2. In other words, the hood 2 comprises a portion or structure 11, to which the hatch 10 is coupled in a movable manner.

For example, in addition to the structure 11, the hood 2 comprises an outer skin 12, which covers the structure 11 defining the outer surfaces 18 of the hood 2 and which comprises the hatch 10. In particular, the structure 11 defines or comprises a skeleton of the hood 2.

The outer skin 12 comprises, in addition to the hatch 10, at least one panel or plate 13, more in particular longitudinally adjacent to the hatch 10.

The hatch 10 is movable at least between a closing position corresponding to the first configuration of the hood 2 and an opening position, which will be described below.

In the first configuration (figure 5), in greater detail, the panel 13 and the hatch 10 are arranged, relative to one another, in a manner substantially similar to that already described with regard to the relative arrangement between the hood 2, as a whole, and the windscreen 3. Indeed, in other words, the panel 13 and the hatch 10 are longitudinally separated from one another by a gap 14, for example having dimensional characteristics, according to the axis X, similar to those already described for the gap 4. Alternatively or in addition, the panel 13 and the hatch 10 are arranged flush with one another. Alternatively or in addition, the panel 13 longitudinally follows the hatch 10 according to the profile 5. In other words, the panel 13 and the hatch 10 extend longitudinally in succession according to the profile 5.

Herein, more in detail, the upper portion 3b, the gap 4, the hatch 10, the gap 14 and the panel 13 follow one another, in this order, along the profile 5, in particular without further elements or empty spaces between them, namely they follow one another in a tight sequence.

The aforementioned domain could therefore extend from a point of the panel 13 (including an edge 15, in particular a rear edge, of the panel 13) to an intermediate point of the upper portion 3b.

In the opening position, the hatch 10 defines a second configuration of the hood 2 (figure 6), in which the hatch 10 opens a compartment 23 at least partially delimited, according to the axis X, by the lower portion 3c, which extends below the hatch 10 in the first configuration of the hood 2.

On the other hand, in the closing position, i.e. in the first configuration of the hood 2, the compartment 23 is closed by the hatch 10.

The compartment 23 is preferably obtained on the structure 11, such that walls 23a, 23b of the structure 11 respectively delimit the compartment 23 from below and longitudinally according to the axis X on the side opposite the lower portion 3c.

Independently, in the first configuration of the hood 2 (hatch 10 in the closing position), the compartment 23 is closed and delimited above by the hatch 10, whereas the compartment 23 is open upwards, in the second configuration of the hood 2 (hatch 10 in the open position), through an opening 23c defined between the hatch 10 and the lower portion 3c transversely to the axis X.

The hatch 10 extends, in particular longitudinally (i.e. according to the axis X), between an edge 16, more in particular a front edge, and an edge 17, more in particular a rear edge.

Specifically, though not necessarily, the edge 17 coincides with or is part of the edge 6 of the hood 2.

If the hood 2 were a rear hood, the edges 16, 17 would be switched, i.e. the edge 16 would be the rear edge and the edge 17 would be the front edge.

In the second configuration of the hood 2 (figure 6), the edge 17 of the hatch 10 is raised with respect to the first configuration, as well as with respect to the edge 16 in the second configuration and, preferably, also in the first configuration.

In other words, the (vertical) height of the edge 17 (in particular, on the longitudinal plane) increases when the hood 2 shifts from the first to the second configuration or when the hatch 10 shifts from the closing position to the opening position, and the (vertical) height relative to the edge 16 also increases, in particular with respect to the first configuration.

Preferably, the rest of the hood 2 with respect to the hatch 10 - or more precisely the panel 13 and/or the structure 11 - remains fixed or does not move when the hood 2 shifts from the first to the second configuration or when the hatch 10 shifts from the rest position to the open position.

In other words, the hatch 10 in the open position is more inclined upwards (according to the axis X, in particular starting from the front edge 16 towards the rear of the motor vehicle 1) than in the first configuration.

In this way, in the specific embodiment shown herein and in the second configuration of the hood 2, namely in the opening position, the hatch 10 forms an aerodynamic ramp to deflect the front aerodynamic flow A (during the use of the motor vehicle 1), so that the latter flows past the boundary line 3a.

Preferably, the hatch 10 is hinged with respect to the rest of the hood 2 or, more precisely, to the structure 11 at the edge 16 around an axis H that is transversal (or, more in particular, orthogonal) to the axis X or to the longitudinal plane and, more precisely, horizontal or parallel to the axis Y.

By shifting from the rest position to the open position, the hatch 10 more generally makes a rotation around the front edge 16, thus sweeping or covering an angle 20 upwards and towards the rear of the motor vehicle 1; preferably, the angle 20 is acute. The angle 20 defines the opening 23c.

In the open position, the hatch 10 forms an obtuse angle 21 towards the outside of the motor vehicle 1 or towards the front of the motor vehicle 1 with the outer surface 18 of the panel 13.

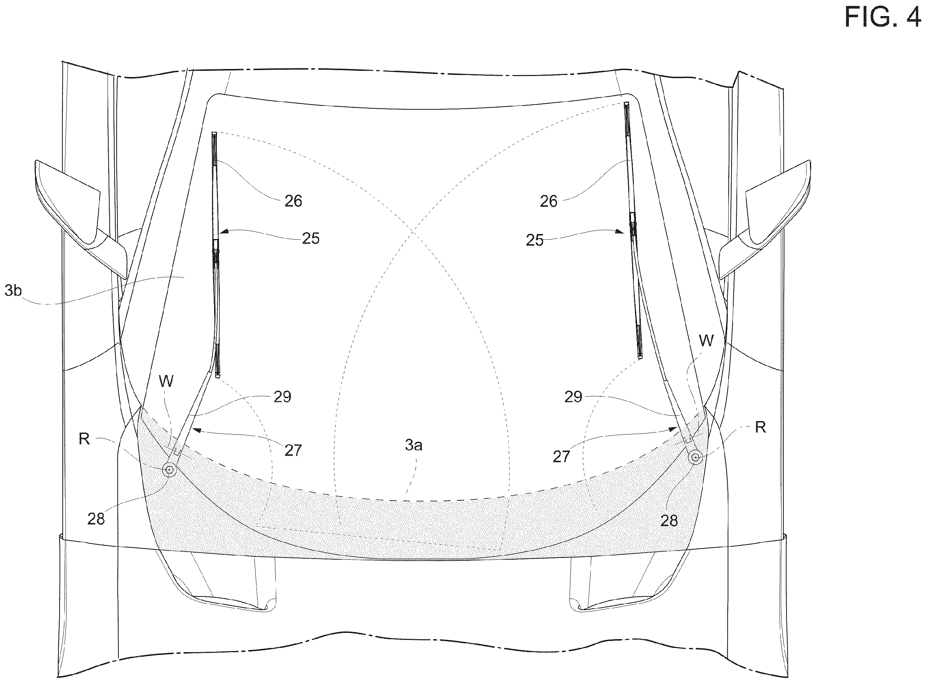

Specifically, the hatch 10 in the open position (i.e. second configuration of the hood 2) separates the angle 20 from the angle 21; the angle 20 and the angle 21 are, in particular, supplementary to one another, in the embodiment shown in figure 4.

Preferably, the motor vehicle 1 or the hood 2 comprises a mechanism 22 controllable to move the hatch 10 between the closing position and the opening position.

The mechanism 22 could be motorised and controlled by a control unit ECU of the motor vehicle 1, for example in a manner that is independent in itself on the basis of a command from a driver or user of the motor vehicle 1, in particular that can be imparted by means of a suitable control device of the motor vehicle 1 (e.g. a button, a control on a screen, a lever, a knob and the like).

According to an example, the motor vehicle 1 comprises a rain detector, for example of a known type and not shown herein, configured to detect water falling on the windscreen 3. Herein, the control unit ECU is configured to control the mechanism 22, so that the latter moves the hatch 10 to the open position, when or in response to the fact that the rain detector (coupled to the control unit ECU) detects water falling on the windscreen 3.

The motor vehicle 1 further comprises at least one windscreen wiper 25 (specifically two windscreen wipers 25) comprising a wiper blade 26 movable on the windscreen 3 in a sliding manner. Without lacking generality, the wiper blade 26 could also be movable on the hood 2 in a sliding manner, according to embodiments which are not shown herein, wherein, in particular, the edge 17 of the hatch 10 does not coincide with or is not part of the edge 6 of the hood 2.

For the purposes of the invention, the windscreen wiper 25 could generally be known, whereby the specific embodiment of the windscreen wiper 25 will be described in a synthetic manner.

In particular, the windscreen wiper 25 comprises an arm 27 pivoted around a pivot axis R, in particular having at least one vertical component.

Therefore, the arm 27 can rotate at least between a first and a second angular position defined by respective values of an angle of rotation of the arm 27 around the pivot axis R. In particular, the first and the second angular position of the arm 27 define the respective ends or limit stops of the overall angular excursion of the arm 27.

The wiper blade 26 is coupled to the arm 27, in particular at an end of the arm 27 opposite the end pivoted around the pivot axis R of the arm 27. Specifically, the wiper blade 26 is fixed to the arm 27, for example in known ways, in particular by means of a snap-fit coupling.

The wiper blade 26 is carried by the arm 27 into (sliding) contact with the windscreen 3. In other words, the arm 27 is configured to push the wiper blade 26 on the windscreen 3, so as to keep the wiper blade 26 in contact (in a sliding manner) with the windscreen 3.

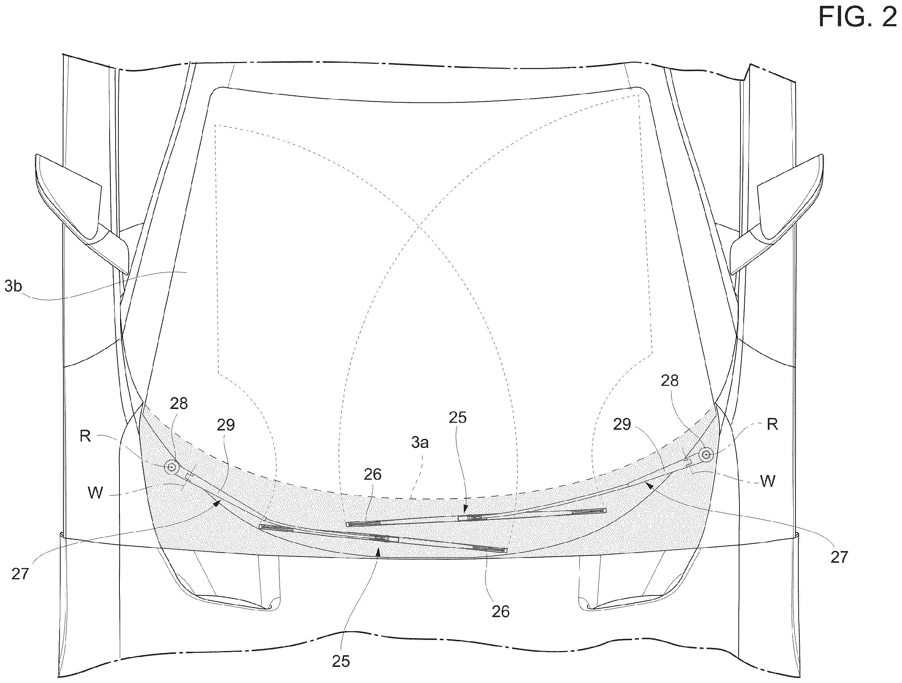

The wiper blade 26 is movable in a sliding manner on the windscreen 3 between a first position (figures 2 and 5) and a second position (figure 4), in particular corresponding to the first and second angular positions defined above, respectively. In particular, the wiper blade 26 is always in contact with the windscreen 3 between the first and second position by means of the thrust exerted by the arm 27 upon the wiper blade 26 towards the windscreen 3.

Therefore, the wiper blade 26 has a stroke defined between the first and the second position corresponding to the ends of the stroke.

The windscreen wiper 25 and, more in particular, the arm 27 is globally elastic and preloaded to push or keep the wiper blade 26 in contact against the windscreen 3. The elasticity of the windscreen wiper 25 causes the latter to be also yielding so as to adapt to the possible variable curvature of the windscreen 3 in all points of the stroke of the wiper blade 26, with the wiper blade 26 kept in contact with the windscreen 3.

For example, the arm 27 comprises a more rigid or less flexible portion 28, which is actually pivoted around the axis R, and a more flexible portion 29 (compared to the portion 28), which is hinged to the portion 28 around an axis W, which is transversal to a longitudinal extension direction of the portion 29.

The wiper blade 26 is fixed to the portion 29 at an end of the portion 29 opposite the one hinged to the portion 28.

The preload of the arm 27 could be determined by one or more torsional springs (not shown) applied between the portions 28, 29 and configured to react with an elastic torque around the axis W against a lifting (or, more precisely, a rotation around the axis W to lift the portion 29) of the portion 29.

Without lacking generality, the hinge effect between the portions 28, 29 around the W axis could be achieved both with a physical hinge (as shown in the drawings) and virtually by increasing the flexibility of the portion 29 at the axis W.

The windscreen wiper 25 further comprises a motor (not shown), which can be controlled to drive in rotation the arm 27 around the axis R, in particular by setting the angle of rotation, between the first angular position and the second angular position. Therefore, the wiper blade 26 can be driven in movement or moved along its stroke, in particular by sliding on the windscreen 3, between the first and second position (corresponding to the first and second angular position, respectively) by means of a control of the motor of the windscreen wiper 25.

The control unit ECU is configured to control the windscreen wiper 25 or, more precisely, its motor so as to drive in movement or move the wiper blade along its stroke and/or between the first and the second position.

For example, the control unit ECU could control the windscreen wiper 25 on the basis of an activation command from the driver or user of the motor vehicle 1, in particular that can be imparted by means of a suitable control device of the motor vehicle 1 (e.g. a button, a control on a screen, a lever, a knob and the like).

The arm 27 is preferably pivoted to the structure 11 of the hood 2 or, more generally, to a frame of the motor vehicle 1. The frame could also include the structure 11 of the hood 2, without lacking generality.

Conveniently, the arm 27 is pivoted at or inside the compartment 23. In particular, the portion 28 is located inside the compartment 23, more in particular for any angular position of the arm 27 between the first and the second angular position.

The wiper blade 26 in the first position is located inside the compartment 23; in the second position, the wiper blade 26 is located outside the compartment 23.

In other words, the stroke of the wiper blade 26 begins and ends or has its ends inside and outside the compartment 23, respectively.

More precisely, the windscreen wiper 25, in particular in its entirety, is located inside and outside the compartment 23, respectively, when the wiper blade 26 is in the first and in the second position.

In the second configuration of the hood 2, the compartment 23 is opened by the hatch 10 to permit a movement of the wiper blade 26 from the first to the second position or vice versa, in particular along the stroke of the wiper blade 26.

In other words, the opening 23c has dimensions that are sufficient to allow the wiper blade 26 or, more precisely, the entire windscreen wiper 25 to get out of the compartment 23 or to get into the compartment 23, in particular with the wiper blade 26 moving along its stroke.

Preferably, the control unit ECU is configured to control the movement of the wiper blade 26, in particular from the first position to the second position, for example by controlling the windscreen wiper 25 or its motor, in particular based on the activation command of the user, through a third position (figures 3 and 6) at the boundary line 3a.

In the third position, in particular, the wiper blade 26 ideally intersects the boundary line 3a.

Furthermore, the control unit ECU is configured to control the mechanism 22 so that the hatch 10 is in the opening position when the wiper blade 26 goes through the third position during the movement from the first position to the second position or optionally also in general, namely always, i.e. any time the wiper blade 26 goes through the third position.

In other words, the control unit ECU controls the mechanism 22 to move the hatch 10 to the opening position before the wiper blade 26 reaches the third position starting from the first position or at the moment in which the wiper blade 26 reaches the third position.

The control of the mechanism 22 could take place in an open loop, namely based on an a priori knowledge of the movement of the wiper blade 26 with respect to the windscreen 3, or by also determining the moment in which the wiper blade 26 reaches the third position, for example based on measurements, in particular of the angle of rotation of the arm 27 around the axis R.

Preferably, the movement from the first position to the second position comprises a first portion between the first position and the third position and a second portion between the third position and the second position, whereby the control unit ECU is configured to control (by still controlling the windscreen wiper 25 or, more precisely, its motor) the first portion with greater force (namely greater torque, in particular of the motor, around the axis R) and lower speed of the wiper blade 26 on the windscreen 3 compared the second portion.

Once the wiper blade 26 reaches the second position, the control unit ECU could then continue to control the windscreen wiper 25 so as to move the wiper blade 26 along a reduced stroke between the second position and an intermediate position between the first position and the second position or, more preferably, between the third position and the second position in a cyclical manner, i.e. continuously alternating a return movement from the second position to the intermediate position and a forward movement from the intermediate position to the second position, in particular until the control unit ECU receives a switch-off command (for example, which can be imparted by means of a suitable control device of the motor vehicle 1, preferably the same as the one used to impart the activation command), for example from the user.

Herein, in response to receiving the switch-off command, the control unit ECU controls the windscreen wiper 25 so as to move the wiper blade 26 to the first position.

Before receiving the switch-off command or, more precisely, during the movement of the wiper blade 26 along the reduced stroke, the control unit ECU can control the mechanism 22 so as to keep the hatch 10 in the opening position.

Conveniently, the control unit ECU can control the movement of the wiper blade 26 along the reduced stroke similarly to the aforementioned second portion of the movement, namely with less force (or torque around the axis R) and higher speed of the wiper blade 26 on the window compared to the first portion of the movement.

Preferably, the control unit ECU is configured to control the mechanism 22 so as to move the hatch 10 to the closing position when the wiper blade 26 reaches or is in the first position or also after the wiper blade 26 or the windscreen wiper 25 completely enters the compartment 23.

With the hatch 10 in the closing position, namely in the first configuration of the hood 2, the hatch 10 closes the compartment 23 with the wiper blade 26 therein (namely with the wiper blade 26 or, more precisely, the windscreen wiper 25 inside the compartment 23) in the first position.

What has been indicated so far can of course be applied to all the windscreen wipers 25 of the motor vehicle 1.

Owing to the above, the advantages of the motor vehicle 1 according to the invention are evident.

The windscreen wiper 25 can conveniently be stored in the compartment 23 when it is switched off, namely in the first position, so that it can be covered by the hatch 10 and thus be invisible from an aesthetic point of view, as well as irrelevant from an aerodynamic point of view.

However, the windscreen wiper 25 emerges from the compartment 23 when and, conveniently, only when actually in use, i.e. when the wiper blade 26 cyclically moves along its reduced stroke between the second position and the intermediate position, thus maintaining its function of wiping the windscreen 3, for example in case of rain.

Furthermore, advantageously, the hatch 10 in the open position can deflect the aerodynamic flow, so that the latter does not convey water to the lower portion 3c in the event of rain during the use of the motor vehicle 1.

Finally, the motor vehicle 1 according to the invention can be subjected to changes and variants, which, though, do not go beyond the scope of protection set forth in the appended claims.

In particular, the number and shape of each one the components described and shown herein could be different, with particular reference to the shape of the profile 5.

The hatch 10 could also not be immediately adjacent to the windscreen 3 along the axis X; for example, a panel fixed to the structure 11 could be located longitudinally between the hatch 10 and the windscreen 3.

Finally, the various embodiments disclosed herein can be combined with one another without any limitations, with particular reference to the various features individually described in the different paragraphs of the description. Each one of these features is independently applicable to each one of the disclosed embodiments.

## Claims

1. Motor vehicle (1) comprising
- a longitudinal axis (X),
- a window (3) arranged transversally with respect to the longitudinal axis, and
- a hood (2) extending according to a first configuration substantially as a longitudinal extension of an upper portion (3b) of the window (3) with the hood and said upper portion (2, 3b) extending longitudinally in succession and flush with each other according to a profile (5) continuous at at least one domain of the longitudinal axis (X) between a first intermediate point of the hood (2) and a second intermediate point of said upper portion (3b),
wherein the hood (2) comprises a hatch (10) movable relative to the rest of the hood (2) to define a second configuration of the hood (2) with the hatch (10) opening a compartment (23) at least partially bounded according to the longitudinal axis (X) by a lower portion (3c) of the window (3) extending below the hatch (10) in the first configuration of the hood (2),
the motor vehicle further comprising at least one windscreen wiper (25) with a wiper blade (26) movable in a sliding manner on the window (3) between a first position and a second position inside and outside said compartment (23), respectively, the compartment (23) being opened by the hatch (10) in the second configuration of the hood (2) to permit a movement of the wiper blade (26) from the first position to the second position or vice versa.

2. The motor vehicle according to claim 1, wherein the wiper (25) comprises an arm (27) pivoted about a pivot axis (R) between a first and a second angular position respectively corresponding to the first and second positions of the wiper blade (26), the wiper blade (26) being coupled to the arm (27).

3. The motor vehicle according to claim 2, wherein the arm (27) is pivoted at said compartment (23).

4. The motor vehicle according to any one of the preceding claims, wherein the lower portion (3c) extends longitudinally with continuity from the upper portion (3b) with an increase in curvature relative to the upper portion (3b), the window (3) thus having an ideal boundary line (3a) between the upper portion (3b) and the lower portion (3c).

5. The motor vehicle according to claim 4, further comprising
- a mechanism (22) controllable to move the hatch (10) between an open position corresponding to the second configuration of the hood (2) and a closed position corresponding to the first configuration of the hood (2), and
- a control unit (ECU) configured to control said movement by driving the wiper blade (26) through a third position at the boundary line (3a) and to control the mechanism (22) such that the hatch (10) is in the open position when the wiper blade (36) is driven through the third position during said movement.

6. The motor vehicle according to claim 5, wherein said movement comprises a first portion between the first position and the third position, and a second portion between the third position and the second position, whereby the control unit (ECU) is configured to control the first portion with greater force and less speed of the wiper blade (26) on the window (3) than the second portion.

7. The motor vehicle according to any of the preceding claims, wherein the hatch (10) in the first configuration of the hood (2) closes the compartment (23) with the wiper blade therein in the first position.

8. The motor vehicle according to any one of the preceding claims, wherein the profile (5) is additionally derivable or at least lipschitzian at said domain.

9. The motor vehicle according to any one of the preceding claims, wherein the profile (5) has a constant slope or curvature at said domain.

10. The motor vehicle according to any of the preceding claims, wherein the profile (5) is all convex or concave or has no inflection points at said domain.

11. The motor vehicle according to any one of the preceding claims, wherein the hatch (10) extends according to the longitudinal axis (X), in particular in front of the window (3), between a first edge (16), for example a front edge, and a second edge (17), for example a rear edge, of the hatch (10), the second edge (17) in the second configuration of the hood (2) being raised relative to the first edge (16) and relative to the first configuration of the hood (2).

12. The motor vehicle according to claim 11, wherein the second edge (17) of the hatch (10) is part of an edge (6), in particular a rear edge, of the hood (2).

13. The motor vehicle according to claim 11 or 12, wherein the hatch (10) is hinged to a structure (11) of the hood (2) at the front edge (16) around an axis (H) transversal to the longitudinal axis (X).

14. The motor vehicle according to any one of claims 11 to 13, wherein the hatch (10) in the second configuration of the hood (2) forms an obtuse angle outwardly of the motor vehicle (1) with a longitudinally adjacent outer surface of the hood (2).
